# EUROPEAN PATENT APPLICATION

(11) **EP 3 343 031 A1**
(43) Date of publication of application: **04.07.2018**
(21) Application number: 17211137.9
(22) Date of filing: 29.12.2017
(51) Int. Cl.: F03G 7/08

(54) **DISPLACEMENT AMPLIFYING DEVICE**

(30) Priority: 30.12.2016 KR 20160183688
(71) Applicant: Kim, Jong Keun, Gyeongsangnam-do 51214 (KR)
(72) Inventor: Kim, Jong Keun, Gyeongsangnam-do 51214 (KR)
(74) Representative: Grünecker Patent- und Rechtsanwälte PartG mbB

(57) **Abstract**

The present application relates to a displacement amplifying device, and more particularly to a displacement amplifying device capable of performing amplification with a large displacement in order to generate energy by using a small displacement caused by a vibration of a vehicle or the like.

An exemplary embodiment of the present application provides a displacement amplifying device, including: a flexible means, an elastic means, a base means, and a loading means. One end of the flexible means is fixed and flexible. One end of the elastic means is engaged with the other end of the flexible means, and the other end thereof is fixed. The base means is provided with a plurality of supporting parts supporting the flexible means at a regular interval in the length direction from one end of the flexible means to the other end thereof. The loading means is provided with a plurality of pressurizing parts pressurizing the flexible means between the supporting parts in order for the flexible means to be deformed between the supporting parts and thus to elongate the elastic means.

According to the present application, when the loading means moves up and down, a rope of the flexible means is moved by amplifying a distance that the loading means moves. Therefore, even though a moving distance of the loading means is small, the moving distance of the rope is able to be greater. In this case, quantity of electricity produced by driving a generator with the rope is greater than quantity of electricity produced by using the moving distance of the loading means.

## Description

### CROSS-REFERENCE TO RELATED APPLICATION

This application claims priority to and the benefit of Korean Patent Application No. 10-2016-0183688 filed in the Korean Intellectual Property Office on December 30, 2016, the entire contents of which are incorporated herein by reference.

### BACKGROUND OF THE INVENTION

### (a) Field of the Invention

The present invention relates to a displacement amplifying device, and more particularly to a displacement amplifying device capable of performing amplification with a large displacement in order to generate energy by using a small displacement caused by a vibration of a vehicle or the like.

### (b) Description of the Related Art

While a vehicle is being driven, the vehicle is vibrated up and down due to the uneven road surface, and the like. Therefore, in the case of the conventional art, various devices for producing electricity have been developed by utilizing a vibration caused by a vertical motion of the vehicle as disclosed below in the patent.

The conventional devices drove a generator on the basis of displacement caused by the vibration of the vehicle. In this case, due to the small displacement caused by the vibration of the vehicle, even though the generator is driven, the electricity was not able to be produced sufficiently.
Korean Patent No. 10-0968877 (Registered on 01 July, 2010)
Korean Patent Laid-Open Publication No. 1998-0002834 (Published on Mar. 30, 1998)
Korean Patent Laid-Open Publication No. 2002-0037537 (Published on May 22, 2002)
Korean Patent Laid-Open Publication No. 10-2007-0014328 (Published on February 01, 2007)
The above information disclosed in this background section is only for enhancement of understanding of the background of the invention and therefore it may contain information that does not form the prior art that is already known to a person of ordinary skill in the art.

### SUMMARY OF THE INVENTION

The present invention has been made in an effort to provide a displacement amplifying device capable of generating a sufficiently large displacement by amplifying displacement, even when the displacement caused by a vibration is small.

### [Technical solution method]

An exemplary embodiment of the present invention provides a displacement amplifying device, including: a flexible means, an elastic means, a base means, and a loading means, One end of the flexible means is fixed and flexible. One end of the elastic means is engaged with the other end of the flexible means, and the other end thereof is fixed. The base means is provided with a plurality of supporting parts supporting the flexible means at a regular interval in the length direction from one end of the flexible means to the other end thereof. The loading means is provided with a plurality of pressurizing parts pressurizing the flexible means between the supporting parts in order for the flexible means to be deformed between the supporting parts and thus to elongate the elastic means.

Furthermore, in the case of the displacement amplifying device, it is preferred that the flexible means is supported at the supporting parts and is provided with a flexible rope capable of being deformed by the pressurizing parts.

Furthermore, in the case of the displacement amplifying device, it is preferred that the supporting parts of the base means are fixed, and the base means further comprises a base frame in which inserting parts are formed in order for a deformed rope to be inserted between the supporting parts.

In addition, it is preferred that the displacement amplifying device further comprises an elastomer to support the pressurizing parts in order for the loading means to be restored.

Furthermore, in the case of the displacement amplifying device, it is preferred that the supporting parts are provided with rollers supporting the rope in order to reduce abrasion of the rope.

Additionally, in the case of the displacement amplifying device, it is preferred that the rope is wound at least one turn in order for the rope to be alternately placed above the inserting parts.

Furthermore, in the case of the displacement amplifying device, it is preferred that the flexible means is provided with a plurality of the ropes.

Furthermore, it is preferred that the displacement amplifying device is provided with the base means consisting of multiple stages. In this case, the rope is formed to be supported at the supporting parts of the base means of the respective stages. In addition, the pressurizing parts are inserted into the inserting parts in order for the rope supported at the supporting parts of the base means of the respective stages to be pressurized and thus deformed.

In addition, in the case of the displacement amplifying device, it is preferred that the pressurizing parts are provided with the rollers pressurizing the rope in order to reduce abrasion of the rope.

### [Work and effect of the present invention]

According to the present invention, when loading means moves up and down, a rope of a flexible means is moved by amplifying a distance that the loading means moves. Therefore, even though a moving distance of the loading means is small, the moving distance of the rope is able to be greater. In this case, quantity of electricity produced by driving a generator with the rope is greater than quantity of electricity produced by using the moving distance of the loading means.

### BRIEF DESCRIPTION OF THE DRAWINGS

In the drawings:
Fig. 1 illustrates a schematic view of a displacement amplifying device according to an exemplary embodiment of the present invention;
Fig. 2 illustrates a perspective view of base means of the exemplary embodiment shown in Fig. 1;
Fig. 3 illustrates a flowchart of Fig. 1;
Fig. 4 illustrates a schematic view of a displacement amplifying device according to another exemplary embodiment of the present invention;
Fig. 5 illustrates a schematic view of a displacement amplifying device according to another exemplary embodiment of the present invention;
Fig. 6 illustrates a schematic view of a displacement amplifying device according to another exemplary embodiment of the present invention;
Figs. 7 and 8 illustrate a displacement amplifying device according to another exemplary embodiment of the present invention; and
Fig. 9 illustrates a displacement amplifying device according to another exemplary embodiment of the present invention.

| | | | |
|---|---|---|---|
| 10: | Flexible Means | 11: | Rope |
| 15: | Elastic Means | 20: | Base Means |
| 21: | Base Frame | 22: | Inserting Part |
| 23: | Supporting Part | 24: | Roller |
| 30: | Loading Means | 31: | Loading Frame |
| 33: | Pressurizing Part | 34: | Roller |
| 40: | Elastomer | | |

### DETAILED DESCRIPTION OF THE EMBODIMENTS

Specifically structural or functional description with respect to exemplary embodiments of the present invention disclosed in the specification is illustrated only for the purpose of describing the exemplary embodiments of the present invention, and the exemplary embodiments of the present invention may be modified in various different ways, all without departing from the spirit or scope of the present invention.

The terms used in the specification are only used to describe the specific exemplary embodiments and are not intended to limit the present invention.

As used herein, the singular expressions "a", "an" and "the" are intended to include the plural expressions as well, unless the context clearly indicates otherwise.

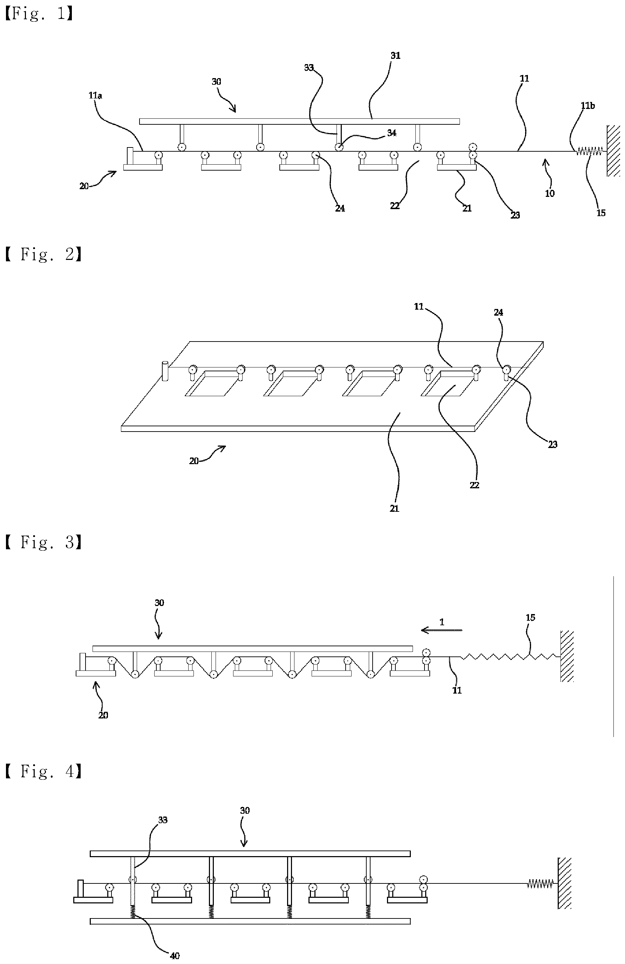

Figs. 1 to 3 illustrate a displacement amplifying device according to an exemplary embodiment of the present invention. Hereinafter, the displacement amplifying device according to the exemplary embodiment of the present invention is described in detail with reference to Figs 1 to 3.

The displacement amplifying device according to the exemplary embodiment of the present invention includes a flexible means 10, an elastic means 15, a base means 20, and a loading means 30.

The flexible means 10 is capable of being flexibly bent and is provided with a rope 11. One end 11a of the rope 11 is fixed.

One end of the elastic means 15 is engaged with the other end 11b of the rope 11, and the other end 11b is fixed.

The base means 20 is provided with a base frame 21 and a supporting part 23. The base frame 21 is disposed at the lower part of the rope 11 and a plurality of supporting parts 23 are fixed at a regular interval. Furthermore, an inserting part 22 is formed between the supporting parts 23 in order for the rope 11 to be deformed. The supporting parts 23 support the rope 11 at opposite sides of the inserting part 22. In this case, the supporting parts 23 are provided with a roller 24 to support the rope 11 in order to reduce abrasion of the rope.

A loading means 30 is provided with a loading frame 31 and a pressurizing part 33. The loading frame 31 is disposed at the upper part of the rope 11 and a vibration is transmitted thereto. The pressurizing part 33 is engaged with the loading frame 31 in order to pressurize the rope 11 between the supporting parts 23. In this case, the pressurizing part 33 is also provided with the roller 34 to pressurize the rope 11 in order to reduce the abrasion of the rope.

As shown in Fig.3, when the loading frame 31 moves downward due to the vibration of the loading means 30, the pressurizing part 33 pressurizes the rope 11. Accordingly, the rope 11 is deformed and inserted into the inserting part 22 of the base frame 21. When the rope 11 is deformed, the rope 11 moves in the direction of arrow 1 and the elastic means 15 is elongated.

In this case, a distance that the rope11 moves in the direction of the arrow 1 due to one of the pressurizing parts 33 is about two times greater than a distance that the loading means 30 moves downward. According to an exemplary embodiment of the present invention, since four pressurizing parts 33 are provided, the distance that the rope11 moves in the direction of the arrow 1 is about eight times greater than the distance that the loading means 30 moves downward. Consequently, even though the distance that the loading means 30 moves is the same, as the pressurizing parts 33 are provided with more quantity, the distance that the rope 11 moves becomes greater.

That is, in the case of the exemplary embodiment of the present invention, the rope 11 is moved by amplifying the distance that the loading means 30 moves. When a vibration of a vehicle is transmitted to the loading means 30, the rope 11 is able to be moved by using the vibration thereof. In this case, even though the vibration of the vehicle is small, displacement of the rope 11 is able to be greater, and electricity is able to be generated by moving the rope 11 and driving a generator. That is, in the case of the exemplary embodiment of the present invention, even though the small vibration occurs, the displacement of the rope 11 is able to be greater such that the generator is able to be driven.

In this case, one end 11a of the rope 11 is fixed, and the other end 11b is engaged with the elastic means 15. However, according to the exemplary embodiment of the present invention, the aforementioned one end 11a and the other end 11b are able to be engaged with the elastic means 15.

Fig. 4 illustrates a schematic view of a displacement amplifying device according to another exemplary embodiment of the present invention. The exemplary embodiment shown in Fig. 4 further includes an elastomer 40 supporting the pressurizing parts 33 in order for the loading means to be restored after the loading means 30 is moved. A spring and the like are used for the elastomer 40.

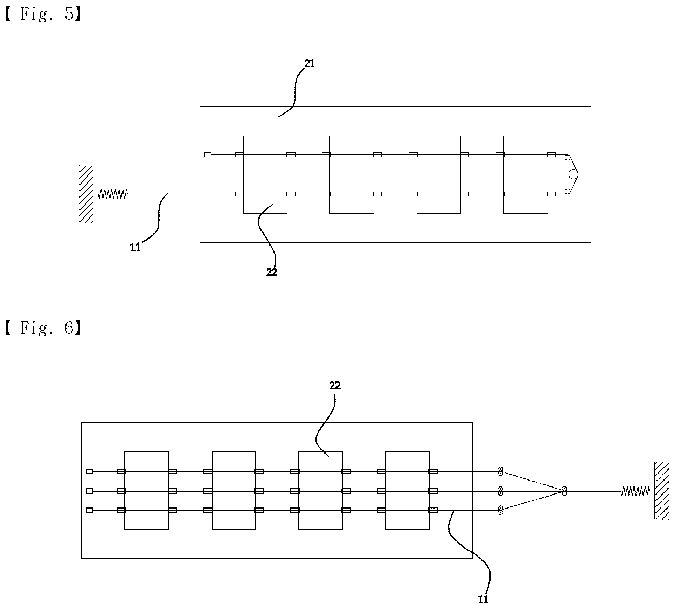

Fig. 5 illustrates a schematic view of a displacement amplifying device according to another exemplary embodiment of the present invention. As shown in Fig. 5 the rope 11 is wound one turn in order for the rope 11 to be alternately and parallelly disposed above the inserting part 22 of the base frame 21. Thus, the displacement of the rope 11 is able to be about two times greater than that of the exemplary embodiment shown in Fig. 1. In the case of the exemplary embodiment in Fig.5, the rope 11 is wounded one turn, and also the rope 11 is able to be wounded many turns.

Fig. 6 illustrates a schematic view of a displacement amplifying device according to another exemplary embodiment of the present invention. As shown in Fig. 5, three ropes 11 are disposed above the inserting part 22. In this case, the displacement of the ropes 11 is the same as that of the exemplary embodiment shown in Fig. 1. However, since three ropes 11 are moved, displacement power generated by the displacement of three ropes 11 is increased about three times greater than that of the exemplary embodiment shown in Fig. 1. The number of the rope 11 can be adjusted in accordance with an exemplary embodiment.

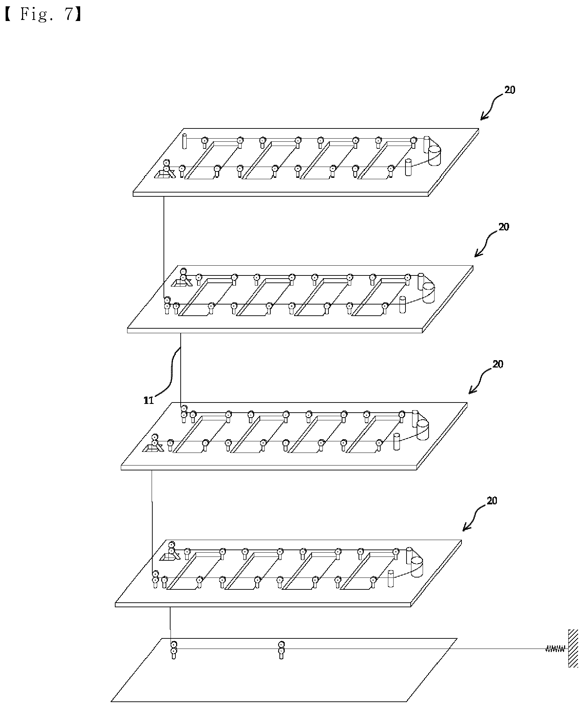

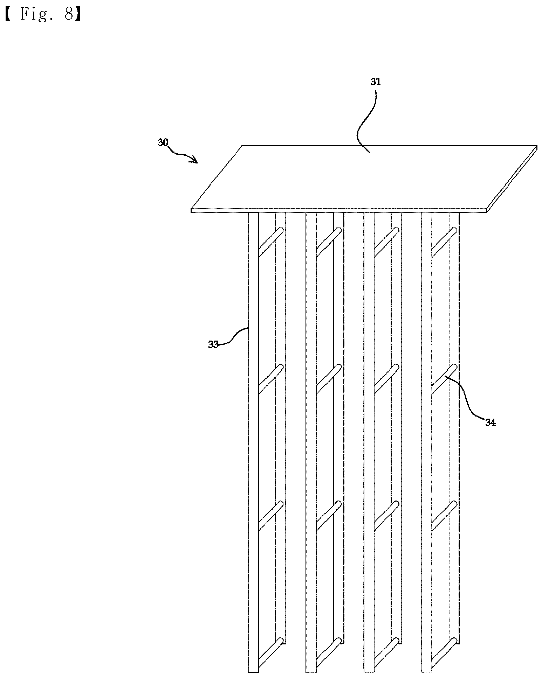

Figs. 7 and 8 illustrate a displacement amplifying device according to another exemplary embodiment of the present invention. In this case, the base means 20 is provided with multiple stages. Thus, the pressurizing parts 33 of the loading means 30 are inserted into the inserting part 22 disposed above the base frame 21 of the highest stage, and the pressurizing parts 33 are extended until the pressurizing parts 33 reach the rope 11 disposed above the inserting part 22 of the base frame 21 of the lowest stage, thereby pressurizing the rope 11 disposed above the of the base frames 21 of the respective stages.

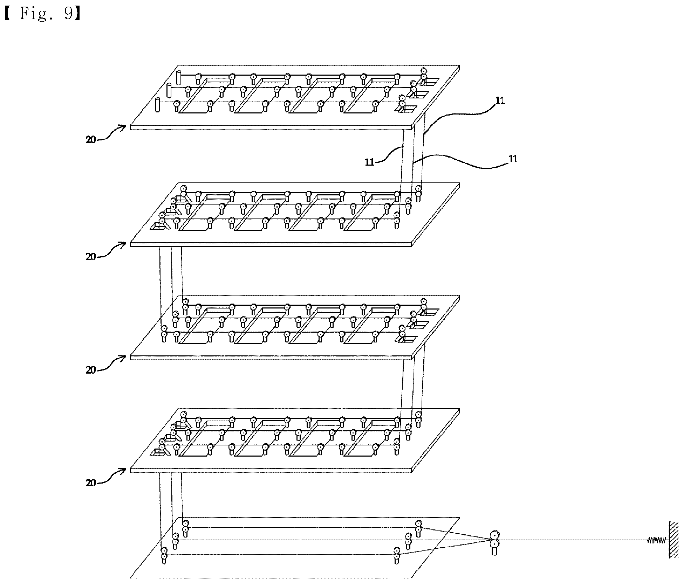

Fig. 9 illustrates a displacement amplifying device according to another exemplary embodiment of the present invention. In this case, the base means 20 is provided with the multiple stages, and also three ropes are used as the exemplary embodiment shown in Fig. 6.

According to the exemplary embodiments of the present invention, even though the loading means 30 is vibrated with small quantity, the displacement of the rope 11 is able to be increased. Therefore, when a generator is driven on the basis of the movement of the rope 11, the generator is sufficiently driven such that electricity is able to be produced. Consequently, when the aforementioned exemplary embodiments are applied and installed to a vehicle, the generator is able to be driven by using the vibration that occurs while the vehicle is being driven.

## Claims

1. A displacement amplifying device, comprising:
a flexible means;
a base means provided with a plurality of supporting parts supporting the flexible means at a regular interval in the length direction from one end of the flexible means to the other end thereof; and
a loading means provided with a plurality of pressurizing parts pressurizing the flexible means between the supporting parts in order for the flexible means to be deformed between the supporting parts and thus to decrease in the length direction.

2. The displacement amplifying device according to claim 1, further comprising an elastic means of which one end is engaged with the other end of the flexible means and the other end thereof is fixed, wherein one end of the flexible means is fixed.

3. The displacement amplifying device according to claim 2, **characterized in that** the flexible means is provided with a flexible rope that is supported at the supporting parts and is deformed by the pressurizing parts.

4. The displacement amplifying device according to claim 3, **characterized in that** the supporting parts of the base means are fixed, and the base means further comprises a base frame in which inserting parts are formed in order for the deformed rope to be inserted between the supporting parts.

5. The displacement amplifying device according to claim 4, further comprising an elastomer supporting the pressurizing parts in order for the loading means to be restored.

6. The displacement amplifying device according to claim 5, **characterized in that** the supporting parts are provided with rollers supporting the rope in order to reduce abrasion of the rope.

7. The displacement amplifying device according to claim 6, **characterized in that** the rope is wound at least one turn in order for the rope to be alternately placed above the inserting parts.

8. The displacement amplifying device according to claim 6, **characterized in that** the flexible means is provided with a plurality of the ropes.

9. The displacement amplifying device according to any one of claims 4 to 8, **characterized in that** the base means is provided with multiple stages, the rope is formed to be supported at the supporting parts in the base means of the respective stages, and the pressurizing parts are inserted into the inserting parts, thereby pressurizing and deforming the rope supported at the supporting parts in the base means of the respective stages.

10. The displacement amplifying device according to claim 9, **characterized in that** the pressurizing parts are provided with the rollers pressurizing the rope in order to reduce abrasion of the rope.
